# EUROPEAN PATENT SPECIFICATION

(11) **EP 1 177 396 B1**
(45) Date of publication and mention of the grant of the patent: **31.03.2004**
(21) Application number: 00927963.9
(22) Date of filing: 10.05.2000
(51) Int. Cl.: F16L 11/04, F16L 11/12

(54) **PROTECTED PLASTIC PIPE**
GESCHÜTZTES KUNSTSTOFFROHR
CONDUIT PLASTIQUE PROTEGE

(30) Priority: 12.05.1999 NL 1012057
(43) Date of publication of application: 06.02.2002
(73) Proprietor: Pipelife Nederland B.V., 1600 AJ Enkhuizen (NL)
(72) Inventor: KURRIS, Johannus, Wilhelmus, Pascal, NL-1611 JK Bovenkarspel (NL); YIGIT, Isteyfo, 7542 AP Enschede (NL); MOES, Lubbertje, NL-1619 BN Andijk (NL)
(74) Representative: van Westenbrugge, Andries
(86) International application number: PCT/NL2000/000302
(87) International publication number: WO 2000/070255

(56) References cited:
- EP-A- 0 474 583
- WO-A-91/15701
- WO-A-95/23685

## Description

The invention relates to a pipe for conveying liquid and/or gas, comprising a liquid-tight and/or gastight inner plastic layer, and an outer plastic layer which surrounds the inner layer. Such a pipe is known by WO-A-9 523 685.

The use of plastic pipes for gas and water pipe networks, sewers and the like is generally known. Plastic pipes of this nature have considerable advantages, such as low manufacturing costs, the fact that connections and branches are easy to produce, and a long service life and high level of reliability.

The plastic pipes are usually laid in a trench in the ground. Particularly in the case of rocky ground, it should be ensured that the trench base and wall does not have any sharp or hard unevenness, such as stones, pieces of rock and the like, since this could easily damage the plastic. For this reason, in most cases a trench of this nature is dug relatively wide and deep and is then filled with sand, in which the pipe is laid.

However, such a procedure has a number of drawbacks which entail increased costs. For example, the sand required generally has to be supplied from elsewhere, costing time and money. Also, it would be simpler and less expensive for the soil which has been removed from the trench to be reused directly but, owing to the risk of damage, fresh sand also has to be used for this purpose. Consequently, the soil has to be removed and processed, which is relatively expensive.

The object of the invention is to provide a pipe of the type described above which does not have these drawbacks. This object is achieved by the fact that the outer plastic layer is foamed in such a way that it can be deformed plastically under the influence of a local load, wherein the foamed outer plastic layer allows deformation to take place under a local load which is lower than the local load which leads to plastic deformation in the inner plastic layer.

An outer protective layer of this nature can be deliberately subjected to deformation to a certain extent without this having an adverse effect on the gastight or liquid-tight inner plastic layer. Even sharp pieces of rock, stones and the like can penetrate into the protective layer without there being any consequences for the leaktightness of the inner plastic layer.

It is also possible for the soil which has come out of the trench to be tipped directly onto the pipe which has been laid, which may lead the protective layer to be deformed on the topside.

The protective layer can be made in various ways. Preference is given to a foamed outer plastic layer which allows plastic deformation to take place under a local load which is lower than the local load which leads to plastic deformation of the inner plastic layer.

In particular, the hardness of the outer plastic layer may be lower than the hardness of the inner plastic layer.

The outer plastic layer may have a foaming level which is between 10% and 90%, which foaming level is defined as the quotient of, on the one hand, the difference between the density of the raw material and the density of the foamed material and, on the other hand, the density of the raw material, multiplied by 100%. Preferably, the foaming level is between 15% and 85%, or between 20% and 80%. The range from 20% - 50% is most preferred.

All kinds of plastics materials can be selected for the pipe according to the invention, for example polyolefines such as polyethylene, polypropylene, polybutene, polystyrene, or ABS, PVC, or mixtures thereof. The inner and outer plastic layers may consist of the same materials or of different materials.

The protective layer may be attached to the inner layer at least over part of its surface which faces towards the inner layer. It is also possible for the protective layer to be permeable to gas or liquids, in such a way that any leaks in the inner layer can be detected in an appropriate way.

The invention will now be explained in more detail with reference to an embodiment which is shown in the figures.

Figure 1 shows a longitudinal section through a plastic pipe according to the invention.

Figure 2 shows the detail II from Figure 1.

Figure 3 shows a detail of the wall of the plastic pipe as laid in a trench in rocky ground.

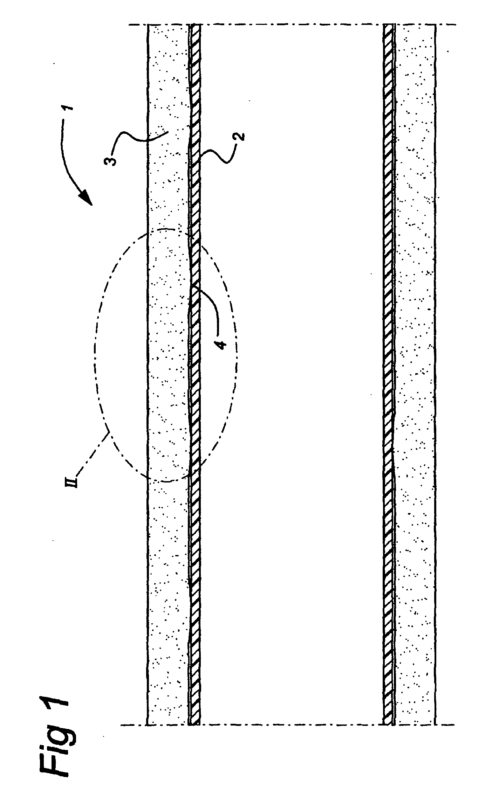

A plastic pipe 1 illustrated in Figure 1 comprises a liquid-tight and/or gastight inner plastic layer 2, as well as an outer, protective layer 3. This outer, protective layer 3, may, for example, be a plastics material.

The protective layer 3 may, for example, be arranged around the plastic layer 2 by means of co-extrusion or sheathing extrusion.

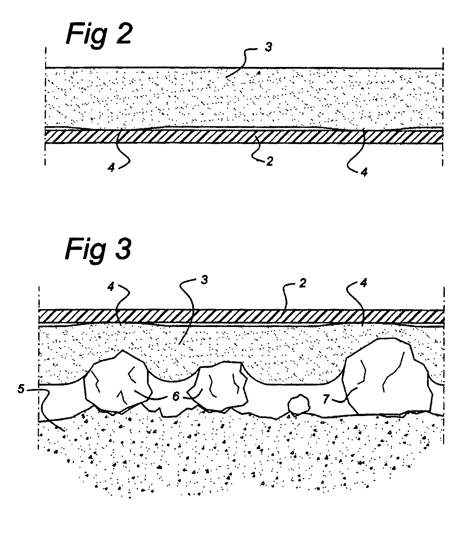

Furthermore, the protective layer 3 does not have to be attached to the inner plastic layer 2 over its entire surface. As shown in the detail illustrated in Figure 2, the outer, protective layer 3 is fixed to the inner plastic layer 2 at defined attachment locations 4.

The outer, protective layer 3 and the inner plastic layer 2 may also be separate from one another over relatively great lengths.

The reason for this is that any leaks in the inner plastic layer 2 can be detected in view of the open space between the layers 2, 3. If the outer, protective layer 3 is porous or is made potentially permeable in some other way, for example by means of small holes or a local weakening, such as a thin membrane, it is possible to detect the leaking gas or liquid.

In the event of a leak in the plastic layer 2, the gas or the liquid then collects in a limited space. This space is limited by the attachment locations 4 between which the leak is located. The location of the leak can then be accurately determined via the protective layer which is porous or provided with holes.

When the plastic pipe 1 according to the invention is being laid on the base 5 of a trench, any sharp pieces which are present in the trench, such as stones 6, may penetrate or cut a certain distance into the outer, protective layer 3 consisting of foamed plastic. The thickness of the foamed outer, protective layer 3 is selected in such a way that although this layer is deformed, the inner plastic layer 2 is not affected.

Any blunt pieces 7 compress the protective layer 3, but without cutting into the latter.

Consequently, the plastic pipe according to the invention can be laid directly on rocky ground without there being any possibility of the sharp pieces in the trench which has been dug being able to damage the liquid-tight and/or gastight plastic layer.

The plastic pipe can also be used in a controlled drilling or no-dig technique.

## Claims

1. Pipe (1) for gas and water pipe networks, sewers and the like, comprising a liquid-tight and/or gastight inner plastic layer (2) and an outer plastic layer (3) which surrounds the inner layer (2), **characterized in that** the outer plastic layer (3) is foamed in such a way that it can be deformed plastically under the influence of a local load, wherein the foamed outer plastic layer allows plastic deformation to take place under a local load which is lower than the local load which leads to plastic deformation in the inner plastic layer (2).

2. Pipe (1) according to Claim 1, in which the hardness of the outer plastic layer (3) is lower than the hardness of the inner plastic layer (2).

3. Pipe (1) according to Claim 1 or 2, in which the outer plastic layer (3) has a foaming level which is between 10% and 90%, which foaming level is defined as the quotient of, on the one hand, the difference between the density of the raw material and the density of the foamed material and, on the other hand, the density of the raw material, multiplied by 100%.

4. Pipe (1) according to Claim 3, in which the foaming level of the outer layer is between 15% and 85%.

5. Pipe (1) according to Claim 3 or 4, in which the foaming level of the outer layer is between 20% and 80%.

6. Pipe (1) according to Claim 3 or 4, in which the foaming level of the outer layer is between 20% and 50%.

7. Pipe (1) according to one of the preceding claims, in which the inner plastic layer (2) and the outer plastic layer (3) comprise the same material.

8. Pipe (1) according to one of Claims 1-6, in which the inner plastic layer (2) and the outer plastic layer (3) comprise different materials.

9. Pipe (1) according to one of the preceding claims, in which at least one of the plastic layers (2, 3) comprises polyolefine.

10. Pipe (1) according to one of the preceding claims, in which at least one of the plastic layers (2, 3) comprises PVC.

11. Pipe according to one of the preceding claims, in which at least one of the plastic layers (2, 3) comprises ABS.

12. Pipe (1) according to one of the preceding claims, in which the outer plastic layer (3) is attached (4) to the inner plastic layer (2) over at least part of its surface which faces towards the inner plastic layer (2).

13. Pipe according to Claim 12, in which the attached areas are annular.

14. Pipe (1) according to one of the preceding claims, in which the outer plastic layer is permeable (3) to gas and/or liquid.

## Patentansprüche

1. Leitung (1) für Gas- und Wasserleitungsnetze, Abwasserleitungen und dergleichen, die eine flüssigkeitsdichte und/oder gasdichte innere Kunststoffschicht (2) und eine äußere Kunststoffschicht (3) umfasst , die die innere Schicht (2) umgibt, **dadurch gekennzeichnet, dass** die äußere Kunststoffschicht (3) in einer solchen Weise geschäumt ist, dass sie plastisch unter dem Einfluss einer lokalen Last verformt werden kann, wobei die geschäumte äußere Kunststoffschicht das Stattfinden plastischer Verformung unter einer lokalen Last ermöglicht, die geringer als die lokale Last ist, die zu plastischer Verformung in der inneren Kunststoffschicht (2) führt.

2. Leitung (1) nach Anspruch 1, bei der die Härte der äußeren Kunststoffschicht (3) geringer als die Härte der inneren Kunststoffschicht (2) ist.

3. Leitung (1) nach Anspruch 1 oder 2, bei der die äußere Kunststoffschicht (3) ein Schäumungsniveau hat, das zwischen 10 % und 90 % liegt, wobei das Schäumungsniveau definiert ist als der Quotient von einerseits der Differenz zwischen der Dichte des Rohmaterials und der Dichte des geschäumten Materials und andererseits der Dichte des Rohmaterials, multipliziert mit 100 %.

4. Leitung (1) nach Anspruch 3, bei der das Schäumungsniveau der äußeren Schicht zwischen 15 % und 85 % liegt.

5. Leitung (1) nach Anspruch 3 oder 4, bei der das Schäumungsniveau der äußeren Schicht zwischen 20 % und 80 % liegt.

6. Leitung (1) nach Anspruch 3 oder 4, bei der das Schäumungsniveau der äußeren Schicht zwischen 20 % und 50 % liegt.

7. Leitung (1) nach einem der vorhergehenden Ansprüche, bei der die innere Kunststoffschicht (2) und die äußere Kunststoffschicht (3) das gleiche Material umfassen.

8. Leitung (1) nach einem der Ansprüche 1 bis 6, bei der die innere Kunststoffschicht (2) und die äußere Kunststoffschicht (3) unterschiedliche Materialien umfassen.

9. Leitung (1) nach einem der vorhergehenden Ansprüche, bei der mindestens eine der Kunststoffschichten (2, 3) Polyolefin umfasst.

10. Leitung (1) nach einem der vorhergehenden Ansprüche, bei der mindestens eine der Kunststoffschichten (2, 3) PVC umfasst.

11. Leitung nach einem der vorhergehenden Ansprüche, bei der mindestens eine der Kunststoffschichten (2, 3) ABS umfasst.

12. Leitung (1) nach einem der vorhergehenden Ansprüche, bei der die äußere Kunststoffschicht (3) an der inneren Kunststoffschicht (2) über mindestens einem Teil ihrer Oberfläche, die der inneren Kunststoffschicht (2) zugewandt ist, befestigt (4) ist.

13. Leitung nach Anspruch 12, bei der die befestigten Bereiche ringförmig sind.

14. Leitung (1) nach einem der vorhergehenden Ansprüche, bei der die äußere Kunststoffschicht für Gas und/oder Flüssigkeit durchlässig (3) ist.

## Revendications

1. Conduit (1) destiné à des réseaux de conduits de gaz et d'eau, d'eaux usées et apparentés, comprenant une couche plastique interne (2) imperméable à l'eau et/ou au gaz et une couche plastique externe (3) qui entoure la couche interne (2), **caractérisé en ce que** la couche plastique externe (3) est constituée d'une mousse de sorte qu'elle peut être déformée de manière plastique sous l'effet d'une charge locale, dans lequel la couche plastique externe constituée de mousse permet la mise en place d'une déformation plastique sous une charge locale qui est plus faible que la charge locale conduisant à une déformation plastique de la couche plastique interne (2).

2. Conduit (1) selon la revendication 1, dans lequel la dureté de la couche plastique externe (3) est plus faible que la dureté de la couche plastique interne (2).

3. Conduit (1) selon la revendication 1 ou 2, dans lequel la couche plastique externe (3) possède un niveau de moussage compris entre 10% et 90%, lequel niveau de moussage est défini comme le quotient, d'une part, de la différence entre la densité du matériau brut et la densité du matériau constitué de mousse et, d'autre part, de la densité du matériau brut, multiplié par 100%.

4. Conduit (1) selon la revendication 3, dans lequel le niveau de moussage de la couche externe est compris entre 15% et 85 %.

5. Conduit (1) selon la revendication 3 ou 4, dans lequel le niveau de moussage de la couche externe est compris entre 20% et 80%.

6. Conduit (1) selon la revendication 3 ou 4, dans lequel le niveau de moussage de la couche externe est compris entre 20% et 50%.

7. Conduit (1) selon l'une des revendications précédentes, dans lequel la couche plastique interne (2) et la couche plastique externe (3) comprennent le même matériau.

8. Conduit (1) selon l'une des revendications 1 à 6, dans lequel la couche plastique interne (2) et la couche plastique externe (3) comprennent des matériaux différents.

9. Conduit (1) selon l'une des revendications précédentes, dans lequel au moins une des couches plastiques (2, 3) comprend de la polyoléfine.

10. Conduit (1) selon l'une des revendications précédentes, dans lequel au moins une des couches plastiques (2, 3) comprend du PVC.

11. Conduit (1) selon l'une des revendications précédentes, dans lequel au moins une des couches plastiques (2, 3) comprend de l'ABS.

12. Conduit (1) selon l'une des revendications précédentes, dans lequel la couche plastique externe (3) est liée (4) à la couche plastique interne (2) sur au moins une partie de sa surface qui est orientée vers la couche plastique interne (2).

13. Conduit selon la revendication 12, dans lequel les zones liées sont annulaires.

14. Conduit (1) selon l'une des revendications précédentes, dans lequel la couche plastique externe est perméable (3) au gaz et/ou au liquide.
